# EUROPEAN PATENT SPECIFICATION

(11) **EP 2 418 043 B1**
(45) Date of publication and mention of the grant of the patent: **28.03.2018**
(21) Application number: 10761773.0
(22) Date of filing: 06.04.2010
(51) Int. Cl.: B23K 35/362, B23K 35/36, B23K 9/18, B23K 9/23

(54) **MELT TYPE HIGH BASICITY FLUX FOR SUBMERGED ARC WELDING USE**
HOCHBASISCHES FLUSSMITTEL VOM SCHMELZ-TYP FÜR UNTERPULVER-LICHTBOGENSCHWEISSUNG
FLUX À FORTE BASICITÉ DE TYPE FONDU POUR SOUDAGE À L'ARC SUBMERGÉ

(30) Priority: 10.04.2009 JP 2009095938
(43) Date of publication of application: 15.02.2012
(73) Proprietor: Nippon Steel & Sumitomo Metal Corporation, Tokyo 100-8071 (JP)
(72) Inventor: MORIMOTO, Hiroshi, Tokyo 100-8071 (JP); SHINADA, Kohichi, Tokyo 101-0032 (JP); OYAMA, Shigeo, Tokyo 104-0045 (JP); NAKAZAWA, Hiroshi, Tokyo 104-0045 (JP)
(74) Representative: Vossius & Partner Patentanwälte Rechtsanwälte mbB
(86) International application number: PCT/JP2010/056491
(87) International publication number: WO 2010/117074

(56) References cited:
- JP-A- 6 155 076
- JP-A- S4 951 136
- JP-A- S61 169 194
- JP-A- 2006 326 642
- JP-A- 2007 090 399
- JP-A- 2009 050 865
- JP-A- 2009 050 866
- JP-A- 2009 050 866
- US-A- 4 437 906

## Description

### Technical Field

The present invention relates to melt flux for submerged arc welding use which is used for welding when making UO pipe for pipeline use from which strength and low temperature toughness for transporting petroleum, natural gas, etc. are demanded and which has a base material of a tensile strength of 800 MPa to 1200 MPa.

### Background Art

As steel pipes for use in pipelines transporting oil, natural gas, etc., welded steel pipes obtained by welding steel pipes together in their longitudinal directions may be mentioned. Among these, UO pipes are produced by using a C-press, U-press, and O-press to shape steel plate into a tube, then welding together the abutting parts of the plate. For the welding method used to join the parts, considering quality and productivity, submerged arc welding is often used.

"Submerged arc welding" is a method which uses flux and weld wire and causes an arc in the flux to perform welding. The weld zone of UO pipe obtained by submerged arc welding usually is comprised of a total of two welds: one layer from the inner surface of the steel pipe and one layer from the outer surface of the steel pipe. The weld metal fabricated from the flux and weld wire is required to have a strength and toughness commensurate with the base material. Further, at the same time, a good weld bead shape and defect-free weld metal are being demanded.

For control for such quality, the composition of the flux and the ingredients of the weld wire are important. In the past, various art has been developed.

For example, in the invention described in PLT 1, to obtain a weld metal with a high toughness, the ranges of ingredients and the ranges of ratios of several ingredients have been prescribed so as to thereby reduce the oxygen content in the weld metal and achieve specific objectives. Specifically, CaF₂ is added in a suitable quantity to decrease the amount of oxygen in the weld metal. Further, to deal with the instability in the arc, which becomes a problem along with addition of CaF₂, SiO₂ and Al₂O₃ are added to vitrify the slag and, furthermore, SiO₂, MgO, and CaO are added in a suitable ratio so as to stabilize the arc. Furthermore, by vitrification of the slag by addition of suitable quantities of Al₂O₃ and SiO₂, the effect of improvement of the work efficiency is also obtained. As a result, a base material containing C: 0.09%, Si: 0.29%, Mn: 1.32%, P: 0.019%, S: 0.007%, and Al: 0.035% is being used to improve the 0°C toughness.

In the invention described in PLT 2, the chemical compositions of the base material and weld metal of large sized pipes for applications requiring resistance to sour environments are defined. Furthermore, in the weld metal, the ratios of the ingredients of the weld metal are defined to try to obtain seam weld metal for UO pipe with excellent low temperature toughness. In this case, a low oxygen type flux is used so that the amount of oxygen of the weld metal in the flux used becomes 0.015% to 0.025%. The flux used here is the low oxygen type flux which is disclosed in PLT 3. To decrease the amount of oxygen in the weld metal, for example, the SiO₂ is decreased to a low level of 5.4% so as to lower the oxygen content.

The invention described in PLT 4 limits the ingredients of the weld wire used and the basicity of the flux used or the chemical ingredients of the base material so as to secure low temperature toughness of the weld metal. The flux used here is CaO-CaF₂-AlO₂-based flux. To make the amount of oxygen of the weld metal the 0.035% or less required for securing toughness, the basicity is made 0.4 or more. The main composition of the flux used in the examples is SiO₂: 25% to 29%, MnO: 2% to 5%, TiO₂: 5% to 7%, Al₂O₃: 5%, CaO: 18% to 33%, MgO: 4% to 9%, and CaF₂: 17% to 26%. By using such flux and welding X65 steel pipe, weld metal of a high toughness of an absorption energy at -30°C of about 20 kgfm (about 200J) is obtained.

The invention described in PLT 5 is applied to welding of particularly thick-walled large-sized steel pipe, so is predicated on multilayer welding and defines the ingredients of the weld-use flux so as to try to obtain toughness. Specifically, to control the hardenability of the weld metal and secure low temperature toughness of the weld metal, the ingredients of the flux are optimized for the first layer and second layer and for the third layer and on.

The invention described in PLT 6 discloses flux for submerged arc welding use applied to weld metal predicated on heat treatment after welding. In PLT 6, the ingredients of the flux are defined so as to secure low temperature toughness of the weld metal after heat treatment after welding. In particular, the lower limits of the Si and Mn in the flux are set from the viewpoint of securing deoxidation, while the upper limits are set from the viewpoint of securing low temperature toughness. A suitable quantity of CaF₂ is added to decrease the amount of oxygen of the weld metal.

In the above way, the ingredients of the flux have been studied for the purpose of securing low temperature toughness of the weld metal. PLT 9 and PLT 10 disclose specific fluxes for welding.

### Citation List

### Patent Literature

PLT 1: Japanese Patent Publication (A) No. 58-055197
PLT 2: Japanese Patent Publication (A) No. 03-285770
PLT 3: Japanese Patent Publication (A) No. 60-191691
PLT 4: Japanese Patent Publication (A) No. 05-000375
PLT 5: Japanese Patent Publication (A) No. 06-155076
PLT 6: Japanese Patent Publication (A) No. 08-257789
PLT 7: Japanese Patent Publication (A) No. 2006-305604
PLT 8: Japanese Patent Publication (A) No. 2007-90399
PLT 9: JP S61 169194 A
PLT 10: JP S49 51136 A

### Summary of Invention

### Technical Problem

In recent years, for the purpose of improving the transport efficiency and reducing costs, demand for high strength UO pipe with a tensile strength of the base material of 800 MPa or more, higher than the strength of conventional UO pipe, has been rising. Naturally, the weld metal of the welds of such UO pipe also is required to have a strength of a tensile strength of 800 MPa or more and a low temperature toughness commensurate with the base material.

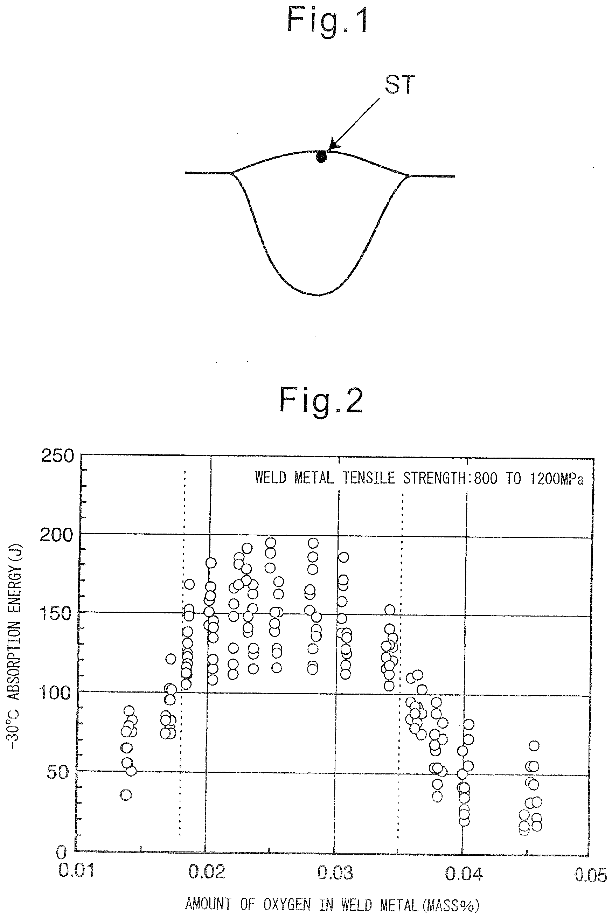

However, in the findings of studies by the inventors, when welding UO pipe for pipeline use with a base material tensile strength of 800 MPa to 1200 MPa by submerged arc welding, the phenomenon such as shown in FIG. 1 of slag being entrained inside of the weld metal near the top of the bead (below, this phenomenon and the parts where this phenomenon occurs will be called "top slag-in ST") is sometimes seen and there was a tendency for low temperature cracking to easily occur after welding.

For example, with the flux of the composition disclosed in the examples of PLT 1, application to high strength weld metal with a high low temperature cracking sensitivity is not possible.

With the flux of the invention described in PLT 3 used in the invention described in PLT 2, the problem of low temperature cracking after welding arises.

With welding using the flux disclosed in PLT 4 to obtain high strength weld metal, there is the problem of occurrence of top slag-in.

With the flux of the composition disclosed in the examples of PLT 5, application to high strength weld metal with a high low temperature cracking sensitivity is not possible.

With the invention described in PLT 6, securing toughness is easy by the effect of reheating by subsequent welding, but application is not possible with single layer welding at the inside and outside surfaces where the reheating effect cannot be expected.

Furthermore, in the invention described in this literature, low temperature cracking easily occurs after welding. This is therefore not suitable for high strength weld metal.

The invention described in PLT 7 proposes melt flux for submerged arc welding use which enables horizontal position welding by a large current and can be applied to any posture of a horizontal, horizontal fillet, and downward posture, but does not focus on the amount of oxygen in the weld metal to prevent a drop in toughness when preparing high strength weld metal.

The invention described in PLT 8 proposes melt flux for submerged arc welding use, used when preparing high strength weld metal with a strength corresponding to 800 MPa to 1200 MPa class high strength steel plate, which improves the low temperature toughness, but application of UO pipe etc. in more severe environments is being demanded.

Therefore, the present invention, in view of this background, has as its task the provision of high basicity melt flux for submerged arc welding use where even when preparing high strength weld metal, sound, high toughness weld metal resistant to low temperature cracking after welding and free of top slag-in can be obtained.

### Solution to Problem

The inventors studied the above such melt flux for submerged arc welding use which can give high strength weld metal which is resistant to low temperature cracking after welding and is free of top slag-in and excellent in low temperature toughness. As a result, they discovered that by setting suitable ranges for CaO, MgO, Al₂O₃, CaF₂, SiO₂, and the total of Li₂O and K₂O, and optimizing the amount of addition of MnO, even when preparing high strength weld metal, as shown below, it is possible to optimize the amount of oxygen of the weld metal so as to obtain flux which enables the preparation of a weld bead which secures a high low temperature toughness while giving a good shape free of top slag-in and is resistant to low temperature cracking after welding.

The strength of the weld metal can be improved by using, as the weld wire used for the submerged arc welding, one in which Ni, Cr, Mo, or other alloy elements have been added. According to the results of studies of the inventors, in such weld metal increased in strength and having a tensile strength of 800 MPa to 1200 MPa, as shown in FIG. 2, the amount of oxygen of the weld metal is important. As shown by the broken line in FIG. 2, when the amount of oxygen in the weld metal is about 0.018% to 0.035% in range, a good toughness where the -30°C impact absorption energy becomes 100J or more can be obtained.

With weld metal with a tensile strength of 800 MPa to 1200 MPa, the microstructure becomes an acicular ferrite microstructure to bainite microstructure. With these microstructures, the amount of oxygen in the weld metal plays an important part in the toughness of the weld metal. On the other hand, with weld metal of over 1200 MPa, the microstructure becomes a martensite microstructure. With just control of the oxygen amount, securing the toughness becomes difficult.

Further, according to the results of studies by the inventors, top slag-in is believed to occur in the following way. That is, to obtain the strength of the weld metal, the above-mentioned alloy elements are added to the weld wire used for the submerged arc welding, but the above alloy elements cause the viscosity of the weld metal melted at the time of welding and the interfacial tension between the molten weld metal and the melt flux to change. For this reason, it is believed, it becomes difficult for the slag melted at the time of welding to float up and separate and slag-in ends up remaining inside of the weld metal at the final solidified part, that is, the top of the bead.

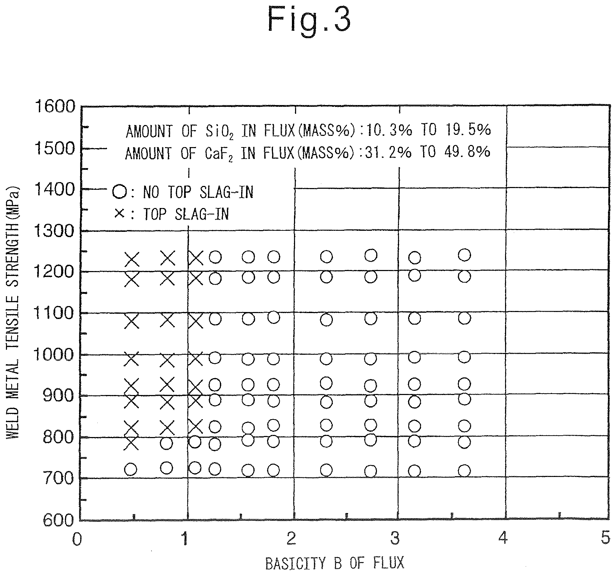

Furthermore, the inventors analyzed the trends in occurrence of this top slag-in by types of tensile strength of the weld metal using the basicity B of the flux calculated by formula (1) shown below. As a result, as shown in FIG. 3, they learned that in weld metal of 800 MPa or higher strength, when the basicity B is 1.2 or more, top slag-in does not occur:

B=6.05N[CaO]+4.0N[MgO]+5.1N[CaF₂]+4.8N[MnO] -0.2N[Al₂O₃]-6.31N[SiO₂]... (1)

wherein, N[k] indicates the molar percentage of the ingredient "k".

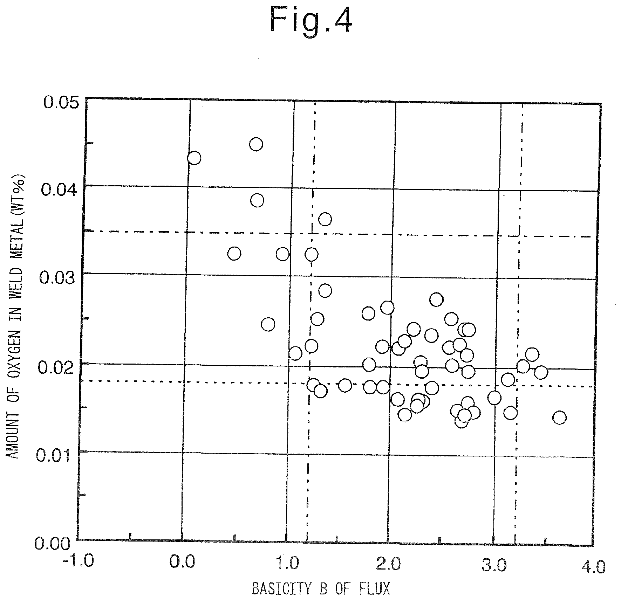

In this regard, there is a correlation between the basicity B of flux and the amount of oxygen in the weld metal. In surveys conducted by the inventors on various fluxes as well, a relationship such as in FIG. 4 was observed. That is, even when the basicity B expressed by formula (1) is 1.2 or more and top slag-in does not occur, sometimes the amount of oxygen in the weld metal becomes less than 0.018%. In that case, as shown in FIG. 1, the toughness at a low temperature is expected to become lower. From this, it is necessary that the basicity B be 1.2 or more and that the amount of oxygen in the weld metal be stable at 0.018% or more.

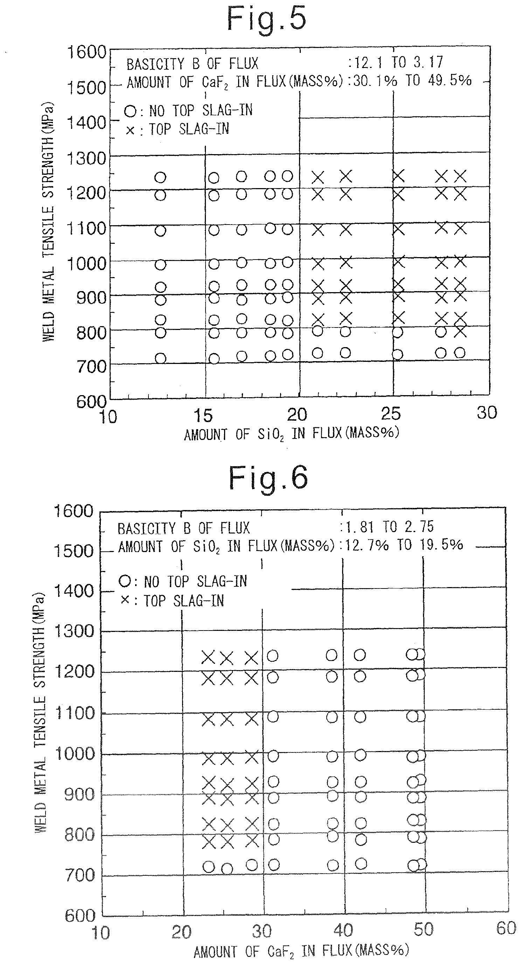

Furthermore, the inventors investigated in detail the effects of the individual ingredients contained in flux on the occurrence of top slag-in. As a result, as shown in FIG. 5, they learned that if the tensile strength of the weld metal is 800 MPa or more, the amount of SiO₂ of the flux becomes over 20% and top slag-in occurs. Furthermore, they learned that the amount of CaF₂ also has an effect on the trend in occurrence of top slag-in and, as shown in FIG. 6, that in high strength weld metal, if the amount of CaF₂ in the flux is less than 30%, top slag-in occurs.

In this way, in high strength weld metal, to avoid top slag-in, it is necessary to adjust the basicity B obtained by formula (1) and the amount of SiO₂ and amount of CaF₂ in the flux. Furthermore, the basicity B and the amount of SiO₂ or the amount of CaF₂ in the flux have to be satisfied in a range where top slag-in can be avoided while controlling the amount of oxygen in the weld metal to 0.018% to 0.035%.

MnO, by being added to the flux in a suitable quantity, enables the amount of oxygen of the weld metal to be increased without inviting the occurrence of top slag-in. By adding MnO in a suitable quantity, it is possible to obtain a basicity B of 1.2 or more and an amount of oxygen of a stable 0.018% or more.

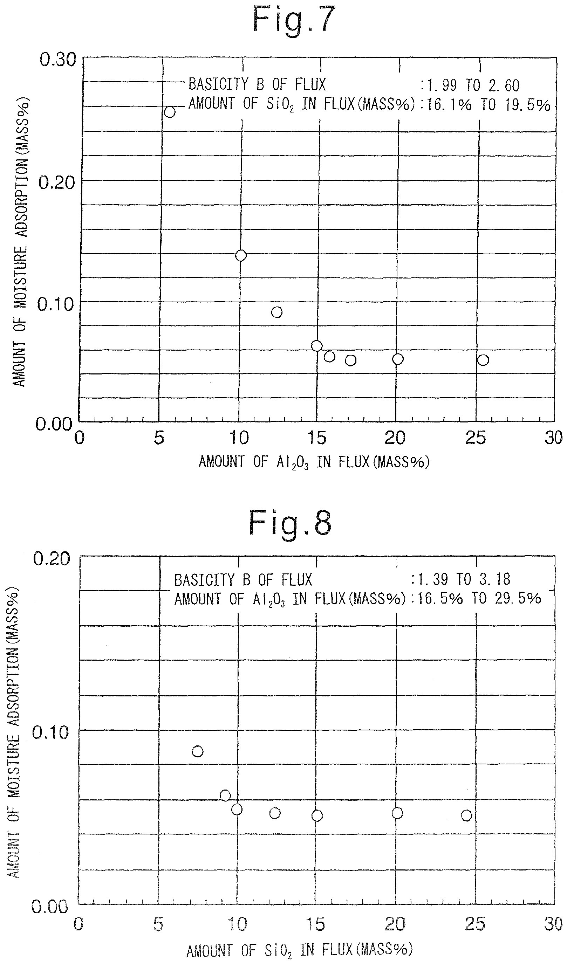

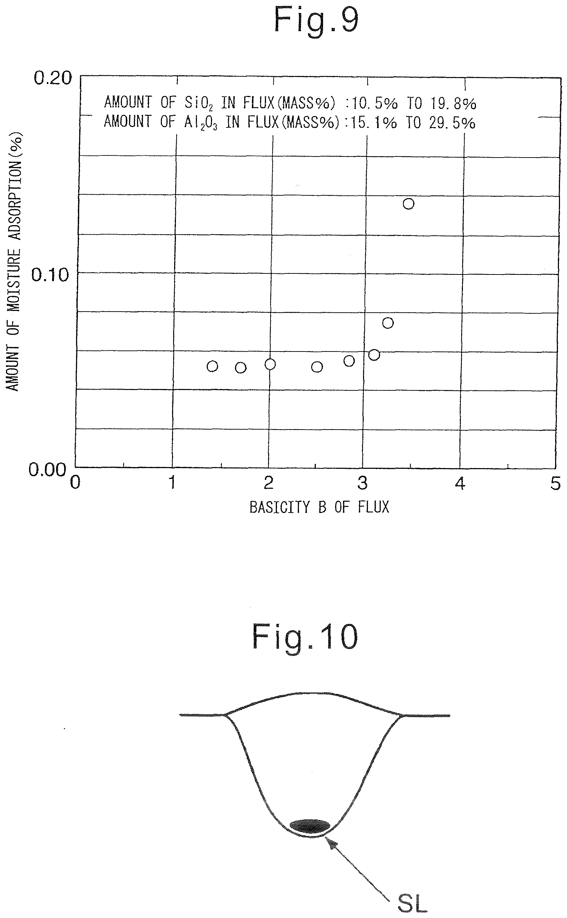

Further, in welding of high strength weld metal, if the flux is crystalline, a trend is seen where the surface area of the flux increases, adsorption of moisture becomes greater, and low temperature cracking easily occurs after welding. FIG. 7, FIG. 8, and FIG. 9 show the results when holding flux in an environment of a temperature of 25°C and a humidity of 60% for 48 hours, then drying it at 500°C for 24 hours and measuring the loss of mass. Note that, in FIG. 7, FIG. 8, and FIG. 9, the reduced mass is attributed to the moisture which had been adsorbed at the flux, the ratio of the reduced mass to the original mass is obtained, and that ratio is used as the amount of moisture adsorption. FIG. 7 shows the relationship between the amount of Al₂O₃ in the flux and the amount of moisture adsorption. FIG. 8 shows the relationship between the amount of SiO₂ in the flux and the amount of moisture adsorption. FIG. 9 shows the relationship between the basicity B of flux and the amount of moisture adsorption. The basicity B shown in FIG. 9 is the value calculated by the above formula (1).

As shown in FIG. 7, when the Al₂O₃ in the flux is 15% or less, the amount of moisture adsorption rapidly increases. Further, as shown in FIG. 8, when the amount of SiO₂ in the flux is less than 10%, the amount of moisture adsorption similarly rapidly increases. Furthermore, as shown in FIG. 9, even if the basicity B determined by the composition of the flux is over 3.2, the amount of moisture adsorption rapidly increases.

This is because if the Al₂O₃ in the flux is 15% or less or the SiO₂ is less than 10% or the basicity B is over 3.2, the surface of the flux becomes crystalline and moisture is more easily adsorbed. In welding of high strength steel, the moisture in the flux causes the diffusive hydrogen of the weld metal to increase and makes low temperature cracking after welding easier to occur. Therefore, in flux used for welding of high strength steel, the Al₂O₃ in the flux has to be over 15%, the amount of SiO₂ has to be 10% or more, and the basicity B has to be 3.2 or less.

That is, the gist of the present invention is as follows:
1. Melt type high basicity flux for submerged arc welding use which is used when welding the seams of UO pipe for pipeline use having a tensile strength of a base material of 800 MPa to 1200 MPa, said melt type high basicity flux for submerged arc welding use characterized by consisting of, by mass%,
   CaO: 5.0% to 25.0%,
   MgO: 1.0% to 5.0%,
   Al₂O₃: over 15.0% to 30.0%,
   CaF₂: 30.0% to 50.0%,
   SiO₂: 10.0% to 20.0%,
   MnO: 0.5% to 15.0%, and
   one or both of Li₂O and K₂O in a total of 0.2% to 5.0%, and
   optionally one or both of CaCO₃ in an amount of 0.05% to 2.0% and B₂O₃ in an amount of 0.05% to 2.0%, having a balance of unavoidable impurities, and having a basicity B obtained by formula (1) of 1.2 to 3.2:

   B=6.05N[CaO]+4.0N[MgO]+5.1N[CaF₂]+4.8N[MnO]-0.2N[Al₂O₃]-6.31N[SiO₂] (1),

   wherein N[k] indicates the molar percentage of the ingredient "k".
2. Use of the melt type high basicity flux as set forth in item 1 for submerged arc welding of the seams of UO pipe for pipeline use having a tensile strength of a base material of 800 MPa to 1200 MPa.

According to the melt type high basicity flux for submerged arc welding use of the present invention, it is possible to obtain high strength weld metal resistant to low temperature cracking after welding, free of top slag-in, and excellent in low temperature toughness, so this can be used when welding the seams of UO pipe for pipeline use having a tensile strength of the base material of 800 MPa to 1200 MPa.

In this regard, the invention described in PLT 1, as shown in the examples, does not contain Ni, Mo, Cr, etc., so, for example, covers low strength steel with a tensile strength of the base material of the 500 MPa to 600 MPa class. Therefore, in PLT 1, the problem of the present invention of the occurrence of top slag-in does not become an issue. Further, with the flux of the composition disclosed in the examples of PLT 1, there are the problems that the amount of Al₂O₃, is small, the flux becomes crystalline, and adsorption of moisture is great. In particular, this cannot be applied to high strength weld metal with a high low temperature cracking sensitivity.

The invention described in PLT 2, as shown in the examples, makes the weld metal a weld metal of a low C with little content of Mo, Ni, or Cr and a strength of the 700 MPa class. Problems arise if applying this as is to weld metal with a further higher strength. For example, with the flux of the invention described in PLT 3 used for the invention described in PLT 2, the problems arise that the amount of SiO₂ is small, the flux becomes crystalline, and adsorption of moisture is great.

Further, the flux described in PLT 3, as described in Table 3 of the examples of PLT 3, does not contain Ni, Cr, or Mo, for example, is flux for application to low strength steel with a tensile strength of the base material of the 500 MPa to 600 MPa class. Therefore, the flux described in PLT 3 does not give high strength weld metal and is not predicated on application to high strength steel with a tensile strength of the base material of the 800 MPa class to 1200 MPa class.

The invention described in PLT 4 covers the X65 class in its application as shown in the examples. Low strength weld metal of a weld metal strength of for example 600 MPa to 700 MPa or so is covered. Therefore, with welding using the flux disclosed in PLT 4 and for obtaining a high strength weld metal, since the amount of SiO₂ is large and the amount of CaF₂ is small, there is the problem of the occurrence of top slag-in.

The invention described in PLT 5, like the invention described in PLT 1, covers low strength steel pipe. With the flux of the composition disclosed in the examples, there are the problems of the flux becoming crystalline and adsorption of moisture being great, so this cannot be applied to high strength weld metal particularly high in low temperature cracking sensitivity.

The flux disclosed in PLT 6 is applied to welding predicated on heat treatment after welding. It assumes multilayer welding as disclosed in the examples. Therefore, the invention described in this literature enables toughness to be easily secured by the reheating effect due to later welding. This cannot be applied in single-layer inner circumference and outer circumference welding, upon which the present invention is predicated, where the reheating effect cannot be expected. Furthermore, the invention described in that literature has a small amount of SiO₂, has advanced crystallization of the flux, and has larger adsorption of moisture as well, so is unsuitable for high strength weld metal. Further, the flux described in PLT 6 is a bond type flux. This is a separate type of flux differing in manufacturing process from the melt flux of the present invention.

### Advantageous Effects of Invention

According to the melt type high basicity flux for submerged arc welding use of the present invention, it is possible to obtain high strength weld metal resistant to low temperature cracking after welding, free of top slag-in, and excellent in low temperature toughness. More particularly, when welding the seams of UO pipe for pipeline use having a tensile strength of the base material of 800 MPa to 1200 MPa, by using the melt flux for submerged arc welding use of the present invention, it is possible to obtain a weld bead with a good bead shape and free of the "top slag-in" defect inside the weld bead. Furthermore, due to the system of ingredients of the present invention, even with a composition of flux in which top slag-in does not occur, the amount of oxygen of the weld metal can be optimized and weld metal having excellent low temperature toughness can be obtained. Due to this, it becomes possible to easily produce sound, high strength weld metal.

### Brief Description of Drawings

FIG. 1 is a schematic view of top slag-in.
FIG. 2 is a view showing a relationship between an amount of oxygen of weld metal and toughness.
FIG. 3 is a view showing a relationship between a basicity B of flux, a tensile strength of weld metal, and trend in occurrence of top slag-in.
FIG. 4 is a view showing a relationship between a basicity B of flux and an amount of oxygen in weld metal.
FIG. 5 is a view showing a relationship between an amount of SiO₂ in flux, a tensile strength of weld metal, and trend in occurrence of top slag-in.
FIG. 6 is a view showing a relationship between an amount of CaF₂ in flux, a tensile strength of weld metal, and trend in occurrence of top slag-in.
FIG. 7 is a view showing a relationship between an amount of Al₂O₃ in flux and moisture adsorption in flux.
FIG. 8 is a view showing a relationship between an amount of SiO₂ in flux and moisture adsorption in flux.
FIG. 9 is a view showing a relationship between a basicity B of flux and moisture adsorption in flux.
FIG. 10 is a schematic view of bottom slag-in.

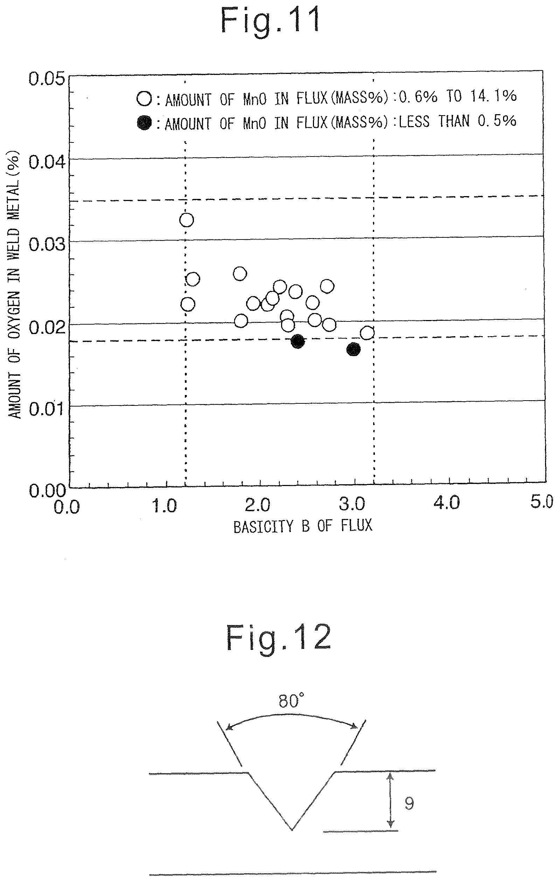

FIG. 11 is a view showing a relationship between a basicity B of flux containing MnO and an amount of oxygen in weld metal.
FIG. 12 is a view showing a groove shape used in the examples and comparative examples.

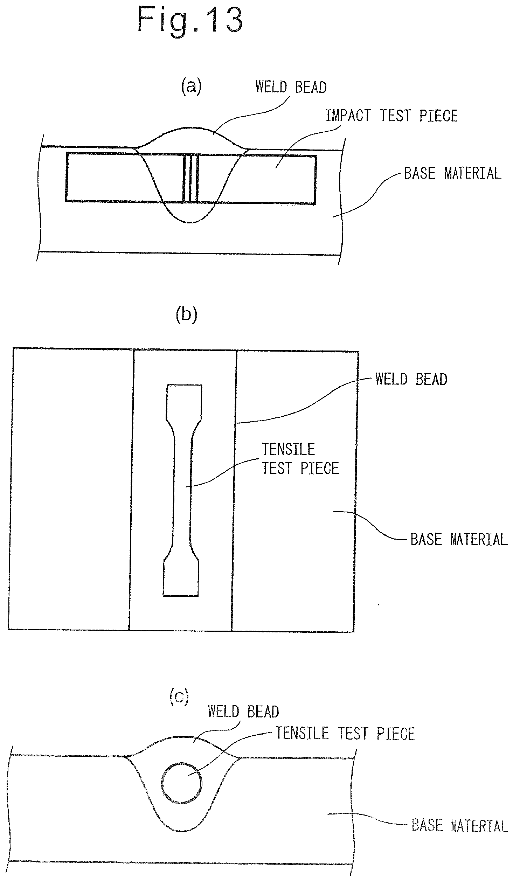

FIG. 13 is a view showing the procedure for obtaining a mechanical strength test piece.

### Description of Embodiments

Below, the reasons for limitation of the ingredients of the present invention will be explained.

### [CaO: 5.0% to 25.0%]

CaO has an effect on the shape of the weld bead of the weld metal. If less than 5.0%, the softening and melting temperature becomes higher and pock marks are caused due to the blocked dispersion of the molten metal gas and otherwise poor appearance of the weld bead surface is caused. On the other hand, if excessive, the viscosity becomes high and the excessive weld metal becomes higher. Further, the strippability of the slag also falls. Therefore, the upper limit was made 25% or less.

Further, CaO is an ingredient having an effect on the basicity B. If less than 5.0%, the basicity B becomes smaller and occurrence of top slag-in is aggravated. If over 25.0%, the basicity B becomes high, the flux becomes crystalline, and the hydrogen cracking sensitivity rises.

### [MgO: 1.0% to 5.0%]

MgO has an effect on the viscosity of the molten slag. If less than 1.0%, the viscosity of the slag becomes too low and pock mark shaped defects are formed on the surface. On the other hand, if over 5.0%, the viscosity of the slag becomes higher and undercut occurs.

### [Al₂O₃ : over 15.0% to 30.0%]

Al₂O₃ is one of the important ingredients in the ingredients forming the slag, so as added as an ingredient forming the flux. However, if 15.0% or less, as shown in FIG. 7, the flux strongly tends to become crystalline and easily adsorbs moisture. As a result, the amount of hydrogen in the weld metal increases and the low temperature cracking sensitivity rises. On the other hand, addition of Al₂O₃ has the action of lowering the basicity B, so excessive addition aggravates top slag-in. Further, Al₂O₃ has an effect on the bead shape. If excessively added, undercut occurs or a sharply upward curved projection forms at the top of the weld bead. From these viewpoints, the upper limit was made 30.0% or less.

### [CaF₂: 30.0% to 50.0%]

CaF₂ is an ingredient which has an effect on the trend in occurrence of top slag-in separate from the basicity B. If CaF₂ is less than 30.0%, top slag-in occurs, so the lower limit was made 30.0% or more. On the other hand, if excessively added, the arc becomes unstable and pock mark shaped patterns are formed on the bead surface. Therefore, the upper limit was made 50.0%. Further, CaF₂ lowers the viscosity and softening and melting temperature of the flux, so prevents the weld bead from becoming an excessively bulging shape and makes the weld bead surface smooth. To obtain this effect, 30.0% or more, preferably over 35%, more preferably over 37%, has to be added.

### [SiO₂: 10.0% to 20.0%]

If excessively adding SiO₂ over 20.0%, top slag-in occurs. Therefore, the upper limit was made 20.0% or less. On the other hand, as shown in FIG. 8, if less than 10.0%, the flux becomes crystalline and easily adsorbs moisture. Therefore, the amount of hydrogen in the weld metal is increased and as a result the low temperature cracking sensitivity of the weld metal becomes higher. Therefore, the lower limit was made 10.0% or more.

At the same time, SiO₂ improves the contact angle of the weld toe with the base material, reduces sticking of slag at the weld toe, etc. to improve the affinity with the base material at the weld toe. Furthermore, it has the effect of smoothing the weld bead surface and preventing extreme bulging of the bead so as to improve the bead shape. To obtain this effect, 10.0% or more is required.

### [MnO: 0.5% to 15.0%]

MnO, by addition of a suitable quantity to the flux, enables an increase in the amount of oxygen in the weld metal without inviting the occurrence of top slag-in. FIG. 11 shows the relationship between the basicity B of flux to which MnO has been added and the amount of oxygen in the weld metal. By adding MnO in a suitable quantity as illustrated, the basicity B becomes the 1.2 or more shown in FIG. 3 and an amount of oxygen of 0.018% or more can be stably obtained. To obtain this effect, 0.5% or more has to be added. However, if adding over 15.0%, bottom slag-in SL easily occurs near the weld line or on the weld line at the bottom of the weld bead as shown in FIG. 10. For this reason, the upper limit was made 15.0% or less. Further, if adding MnO over 15.0%, when the basicity is low, the amount of oxygen in the weld metal becomes excessive and the toughness may fall. Therefore, the upper limit was made 15.0% or less.

### [Basicity B obtained by formula (1): 1.2 to 3.2]

B=6.05N[CaO]+4.0N[MgO]+5.1N[CaF₂]+4.8N[MnO] -0.2N[Al₂O₃]-5.31N[SiO₂]... (1)

where, N[k] indicates the molar percentage of the ingredient "k"

If analyzing the relationship between the basicity B and the occurrence of top slag-in, as shown in FIG. 3, if the basicity B is 1.2 or more, top slag-in no longer occurs. On the other hand, from the viewpoint of top slag-in, there is no upper limit to the basicity B, but as shown in FIG. 9, if the basicity B is over 3.2, the flux strongly tends to become crystalline and therefore easily adsorbs moisture. As a result, the amount of hydrogen in the weld metal increases and the low temperature cracking sensitivity rises. From such a viewpoint, the upper limit of the basicity B was made 3.2 or less.

Further, if the basicity B is less than 1.2, due to the synergistic effect with the addition of MnO, the oxygen becomes excessive and the possibility arises of the toughness of the weld metal falling, so the lower limit was made 1.2 or more.

### [Tensile strength of base material: 800 MPa to 1200 MPa]

In the present invention, the tensile strength of the base material is made 800 MPa to 1200 MPa, preferably is over 980 MPa to 1200 MPa.

If the tensile strength of the base material is less than 800 MPa, the strength is low for the field in which the present invention is applied, that is, UO pipe, so the problem of top slag-in does not arise. Further, if the tensile strength of the base material exceeds 1200 MPa, sometimes a sufficient toughness cannot be secured.

The chemical composition of the base material used, from the viewpoints of strength and toughness, is preferably, by mass%, C: 0.03% to 0.12%, Si: 0.5% or less, Mn: 1.2% to 2.5%, Ni: 2.0% or less, Mo: 0.6% or less, Ti: 0.030% or less, Al: 0.07% or less, P: 0.015% or less, S: 0.003% or less, Nb: 0.0015% to 0.1%, and N: 0.008% or less.

Further, the chemical composition of the weld wire used, from the viewpoints of the strength and toughness of the weld metal and the manufacturability of the wire, is preferably, by mass%, C: 0.02% to 0.15%, Si: 0.5% or less, Mn: 1.0% to 2.5%, Ni: 10.0% or less, Mo: 4.0% or less, Ti: 0.030% or less, O: 0.008% or less, Al: 0.05% or less, P: 0.015% or less, S: 0.01% or less, and N: 0.008% or less.

### [One of both of Li₂O and K₂O in total: 0.2% to 5.0%]

The total amount of one or both of Li₂O and K₂O is 0.2% to 5.0%, more preferably over 2% to 5.0%.

MnO increases the reignition voltage of the arc. Therefore, the voltage raised at the time when the arc is reignited during welding causes the surface of the molten pool to vibrate and as a result tends to make the wave pattern on the surface of the weld bead, that is, the ripple lines, uneven. This is not a problem in terms of mechanical properties and is not recognized as a defect, but is not preferable in terms of appearance and, when coating the surface after welding, becomes a cause of lowered work efficiency. As opposed to this, Li₂O and K₂O have the effect of calming this and eliminating unevenness of ripple lines. To obtain this effect, the total amount of one or both of Li₂O and K₂O has to be 0.2% or more. On the other hand, if adding over 5.0%, the slag strippability falls and sticking of slag occurs. Therefore, the upper limit was made 5.0% or less.

Further, in flux for submerged arc welding use, the amount of nitrogen in the weld metal is decreased by adding CaCO₃ to the flux in an amount of 0.05% to 2.0% or the strength of the weld metal is adjusted by adding B₂O₃ in an amount of 0.05% to 2.0%, but these have no effect at all on the action targeted by the present invention of the effect of avoiding top slag-in. These ingredients may be added in accordance with need.

### Examples

Next, examples and comparative examples will be used to specifically explain the effects of the present invention.

In the examples, reference examples and comparative examples, the inventors used three-electrode submerged arc welding under the welding conditions shown in Table 1, combined wires of different compositions and strength levels shown in Table 2, formed grooves of cross-sectional shapes shown in FIG. 12 in base materials having the chemical compositions and tensile strengths shown in Table 3 and plate thicknesses of 20 mm and lengths of 1500 mm, and performed welding using the fluxes of the ingredients shown in Table 5 or Table 6. The combinations of wires used in the examples, reference examples and comparative examples are shown in Table 4.

Note that the groove shown in FIG. 12 is a cross-sectional V-shaped groove provided between base materials for welding in the examples and comparative examples. As shown in FIG. 12, the depth of the groove is 9 mm, and the angle formed by the V-shaped groove is 80°. Further, in the examples and comparative examples, the flux used was kept in 20°C, 60% humidity environment for 24 hours, then, before use, dried in a 150°C oven for 2 hours.

**Table 1**

| No. of electrodes | | 1st electrode | 2nd electrode | 3rd electrode | Welding speed (m/min) | Input heat (kJ/mm) |
|---|---|---|---|---|---|---|
| 3-electrode welding | Current (A) | 1000 | 800 | 600 | 1.6 | 3.0 |
| | Voltage (V) | 32 | 32 | 36 | | |

**Table 2**

| Wire diameter (nm) | Wire | Strength level | C | Si | Mn | Ni | Cr | Mo | Ti | O | N | Al |
|---|---|---|---|---|---|---|---|---|---|---|---|---|
| 4.0 | A | 800 MPa class | 0.11 | 0.21 | 2.3 | 0.28 | 0.00 | 0.00 | 0.010 | 0.005 | 0.006 | 0.005 |
| | B | 900 MPa class | 0.12 | 0.15 | 1.9 | 1.30 | 0.80 | 0.90 | 0.010 | 0.005 | 0.005 | 0.018 |
| | C | 1000 MPa class | 0.07 | 0.16 | 1.9 | 4.20 | 1.50 | 1.70 | 0.025 | 0.005 | 0.004 | 0.004 |
| | D | 1200 MPa class | 0.06 | 0.25 | 1.7 | 5.20 | 2.10 | 2.21 | 0.022 | 0.005 | 0.002 | 0.002 |
| | E | 1400 MPa class | 0.04 | 0.38 | 1.7 | 7.60 | 2.69 | 3.79 | 0.005 | 0.005 | 0.002 | 0.002 |
| | F | 600 MPa class | 0.07 | 0.21 | 1.8 | 0.00 | 0.00 | 0.00 | 0.005 | 0.005 | 0.007 | 0.004 |

**Table 3**

| Base material | Tensile strength (MPs) | Chemical composition (mass%) | | | | | | | | | |
|---|---|---|---|---|---|---|---|---|---|---|---|
| | | C | Si | Mn | Ni | Cr | Mo | Nb | Ti | N | Al |
| i | 965 | 0.05 | 0.21 | 1.9 | 1.0 | 0.6 | 0.3 | 0.050 | 0.013 | 0.004 | 0.018 |
| ii | 750 | 0.08 | 0.20 | 1.7 | 0.0 | 0.6 | 0.0 | 0.002 | 0.020 | 0.006 | 0.010 |

**Table 4**

| Symbol | Base material | Wire | | | Example of weld metal tensile strength (MPa) |
|---|---|---|---|---|---|
| | | 1st electrode | 2nd electrode | 3rd electrode | |
| a | i | B | A | C | 828 |
| b | i | C | B | B | 892 |
| C | i | C | C | B | 958 |
| d | i | C | C | C | 1007 |
| e | i | D | E | D | 1150 |
| f | i | E | E | E | 1246 |
| g | ii | B | F | F | 732 |

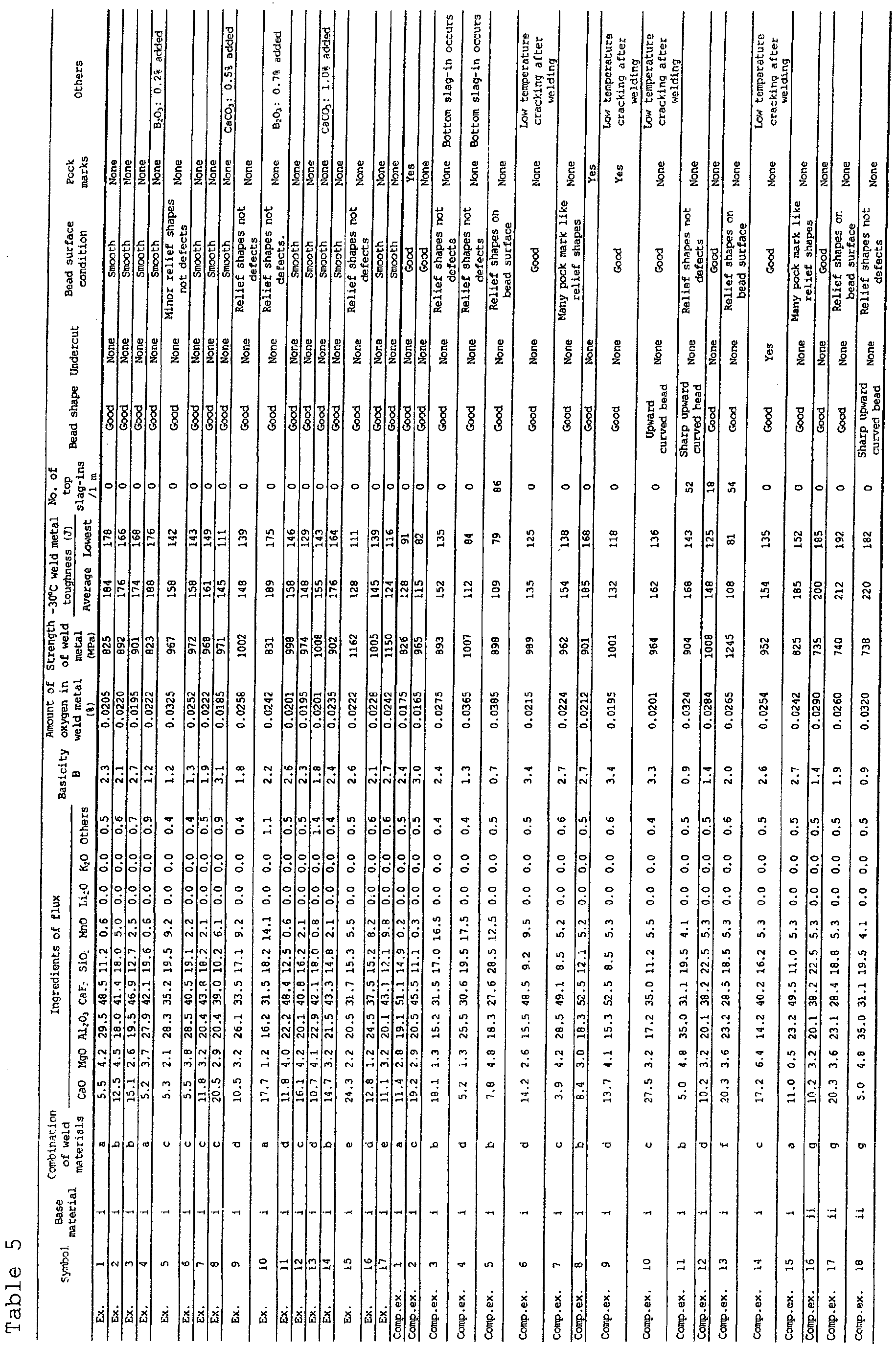

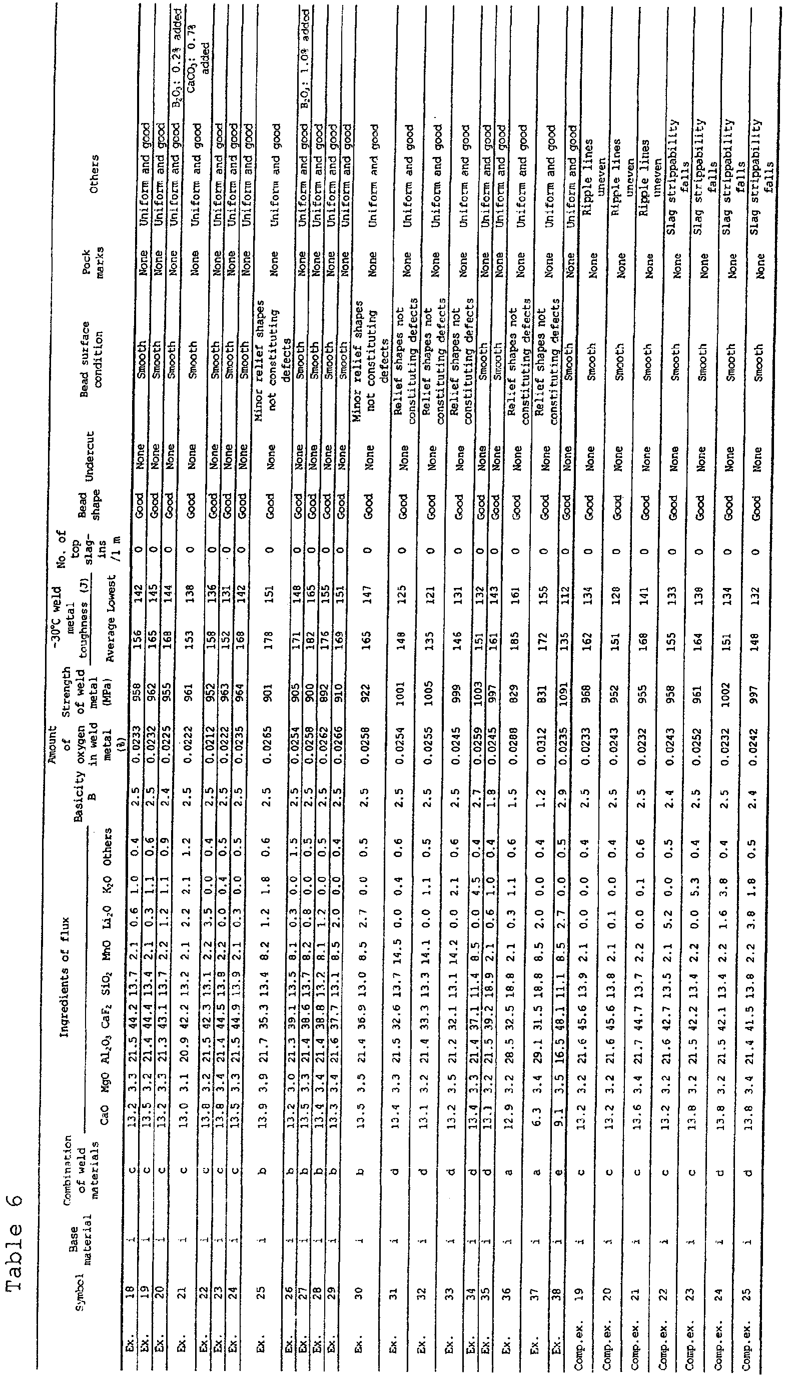

The tensile strength and toughness of the weld metal were evaluated by a rod-shaped tensile test piece of weld metal and 2 mm V-notched Charpy impact test. FIG. 13 is a plan view for explaining the procedure for obtaining a tensile test piece from welded plates, while FIG. 13(a) is a cross-sectional view of the impact test piece obtained from welded plates as seen from the weld line direction. FIG. 13(b) is a plan view showing a tensile test piece obtained from welded plates, while FIG. 13(c) is a cross-sectional view of the tensile test piece obtained from welded plates as seen from the weld line direction.

The impact test piece, as shown in FIG. 13(a), was taken from the center part of the weld metal in the plate thickness direction. It was worked so that the notch depth direction became the weld line direction. The impact test was repeated three times at a test temperature of -30°C. The toughness of the weld metal was evaluated using the average value of the results of impact tests repeated three times and the lowest value of the results of the three impact tests.

Further, the rod-shaped tensile test piece, as shown in FIG. 13(b) and FIG. 13(c), was taken from the center part of the weld metal in the plate thickness direction. It was worked so that the axial direction of the test piece became the weld line direction. The tensile test was repeated once at room temperature.

The state of internal defects in the weld metal bead was investigated by radiographic nondestructive testing over the entire thickness of 20 mm and the entire length of the weld line. After that, the plate thickness was reduced to a thickness of 7 mm from the back surface opposite to the weld surface, then radiography nondestructive testing was again performed to investigate for the presence of any top slag-in. The bead shape was evaluated by the shape of the excessive weld metal of the bead, undercut, relief shapes on the bead surface, pock marks, and the state of waves called "ripples" appearing on the weld bead surface, and cross-sectional macro observation.

If the surface is formed with sharp relief shapes, these may show up in radiographic testing and be recognized as defects, so judgment is made including the possibility of these being recognized as defects.

The concentration of oxygen in the weld metal is based on the method of assaying oxygen in metal materials described in JIS Z2613.

Reference examples and comparative examples are shown in Table 5. In the flux ingredients of Table 5, "Others" are B₂O₃ or CaCO₃ or oxides of alkali metals, P, S, and other impurities unavoidably entering from the raw materials.

The strength of the weld metal is a high strength of 800 MPa or more. Further, the amount of oxygen in the weld metal is optimized. The -30°C low temperature toughness (Charpy absorption energy) exceeded 100J in each case. Further, the basicity B of flux and the amount of SiO₂ and CaF₂ are within the ranges of the present invention, so there is also no top slag-in and the bead shape is good.

Further, in Reference Examples 4 and 10, the amount of B in the weld metal is adjusted to improve the hardenability of the weld metal by the addition of B₂O₃, but this has no effect on the effect of prevention of occurrence of top slag-in in the present invention.

Further, in Reference Examples 8 and 13, the increase in nitrogen in the weld metal is prevented by the addition of CaCO₃, but this has no effect on the effect of prevention of occurrence of top slag-in in the present invention.

Next, comparative examples relating to claim 1 will be explained.

Comparative Example 1 and Comparative Example 2 have ingredients other than MnO and a basicity B inside the ranges of the present invention, but have MnO less than the range of the present invention. Therefore, the basicity B is high and top slag-in does not occur, but the amount of oxygen is small, the toughness of the weld metal is low, and the average value of the Charpy absorption energy exceeds 100J, but in the individual values (lowest values), data of under 100J is obtained. From Comparative Examples 1 and 2, it is shown that by making the range of addition of MnO 0.5% or more, the amount of oxygen is stably obtained and therefore it is possible to critically prevent a drop in the toughness.

Comparative Example 3 and Comparative Example 4 have ingredients other than MnO and a basicity B inside the ranges of the present invention, but have MnO added exceeding the range of the present invention. Therefore, slag-in occurs at the bottom. Further, in Comparative Example 4, the oxygen is also excessive, so the toughness of the weld metal (Charpy absorption energy) falls under 100J in individual values. From Comparative Examples 3 and 4, it is shown that by making the range of addition of MnO 15.0% or less, it is possible to critically prevent the occurrence of slag-in at the bottom.

Comparative Example 5 has CaF₂ in the flux less than the range of the present invention and has SiO₂ exceeding the range of the present invention. Further, the basicity B is also low. Therefore, top slag-in occurs. Further, the oxygen is excessive, so the -30°C toughness (Charpy absorption energy) is above 100J in average value, but values under 100J are obtained in individual values.

Comparative Example 6 has an amount of SiO₂ in the flux of less than the range of the present invention and has a basicity B exceeding the range of the present invention. Therefore, moisture ends up being adsorbed during storage. Despite the flux being kept under dry conditions before use, low temperature cracking occurs after welding. To prevent low temperature cracking, further sufficient drying of the flux under a high temperature becomes necessary. Further, the SiO₂ in the flux is small, so slag sticks to the weld toes and the affinity with the base material falls.

Comparative Example 7 has a CaO in the flux of less than the range of the present invention. Therefore, pock mark-like relief shapes form on the bead surface and the bead appearance falls. Further, the SiO₂ in the flux is small, so slag sticks to the weld toes and the affinity with the base material falls.

Comparative Example 8 has an amount of CaF₂ in the flux exceeding the range of the present invention, so the arc becomes unstable and "pock mark" patterns are formed in the bead surface.

Comparative Example 9 also, in the same way as Comparative Example 8, has an amount of CaF₂ in the flux exceeding the range of the present invention, so the arc becomes unstable and "pock marks" patterns are formed in the bead surface. Further, the SiO₂ in the flux is small, so slag sticks to the weld toes and the affinity with the base material falls. Furthermore, in the same way, the amount of SiO₂ in the flux is less than the range of the present invention, so under the drying conditions of the flux of this experiment, the drying is insufficient and low temperature cracking occurs after welding.

Comparative Example 10 has a CaO in the flux exceeding the range of the present invention, so the viscosity of the molten slag is high, there is high excessive weld metal, and an upward curved bead results. Further, the strippability of the slag also falls. Further, the basicity B also exceeds the range of the present invention, so under the drying conditions of the flux of this experiment, the drying is insufficient and low temperature cracking occurs after welding.

Comparative Example 11 has an Al₂O₃ in the flux exceeding the range of the present invention. Therefore, the shape of excessive weld metal of the bead becomes a triangular sharp upward curved bead. Furthermore, undercut occurred. Further, the basicity B of the flux is less than the range of the present invention. Therefore, top slag-in occurs.

Comparative Example 12 has an amount of SiO₂ in the flux exceeding the range of the present invention. Therefore, top slag-in occurs.

Comparative Example 13 has an amount of CaF₂ in the flux of less than the range of the present invention. Therefore, top slag-in occurs. Further, the weld metal has a microstructure of a martensite microstructure, has a strength of 1250 MPa or more, and has low toughness.

Comparative Example 14 has an MgO in the flux exceeding the range of the present invention. Therefore, the viscosity of the slag becomes high and undercut occurs. Further, the amount of Al₂O₃ is less than the range of the present invention, so the flux becomes crystalline and moisture is easily adsorbed. Therefore, under the drying conditions of the flux of this experiment, the drying is insufficient and low temperature cracking occurs after welding.

Comparative Example 15 has an MgO in the flux less than the range of the present invention. Therefore, pock mark-like defects are formed at the weld bead surface.

Comparative Example 16 to Comparative Example 18 are examples using base materials with low strength. The combinations of weld materials also are low in strength at about 740 MPa. Therefore, Comparative Example 16 has an SiO₂ exceeding the range of the present invention, but top slag-in does not occur. Comparative Example 17 has CaF₂ of less than the range of the present invention, but top slag-in does not occur. Further, Comparative Example 18 has an amount of Al₂O₃ exceeding the range of the present invention, but the shape of the excessive weld metal of the bead becomes a sharp upward curved bead.

Next, examples and comparative examples according to claim 2 are shown in Table 6. In the flux ingredients of Table 6, "Others", in the same way as in Table 5, are B₂O₃ or CaCO₃ or oxides of alkali metals, P, S, and other impurities unavoidably entering from the raw materials.

Example 18 to Example 38 all are fluxes having ingredients within the range of claim 1 of the present invention, so the -30°C toughness (Charpy absorption energy) is good and no top slag-in occurs either. Furthermore, Li₂O and K₂O are suitably added, so the ripple lines on the bead surfaces are even and a beautiful bead surface is formed.

Further, in Example 20 and Example 26, the amount of B in the weld metal is adjusted to improve the hardenability of the weld metal by the addition of B₂O₃, but this has no effect on the effect of prevention of occurrence of top slag-in in the present invention.

Further, in Example 21, the increase in nitrogen in the weld metal is prevented by addition of CaCO₃, but this has no effect on the effect of prevention of occurrence of top slag-in in the present invention.

Next, comparative examples according to claim 1 of the present invention described in Table 6 will be explained.

Comparative Example 19 to Comparative Example 21 have amounts of addition of Li₂O and K₂O of less than the range of the present invention, so the ripple lines on the bead surfaces become uneven.

Comparative Example 22 and Comparative Example 23 have amounts of addition of Li₂O or K₂O which exceed the range of the present invention. Therefore, the slag sticks to the bead surfaces and the strippability of the slag falls.

Comparative Example 24 and Comparative Example 25 have total amounts of addition of Li₂O and K₂O when adding both which exceed the range of the present invention. Therefore, the slag sticks to the bead surfaces and the strippability of the slag falls.

### Experiment 1

The inventors used three-electrode submerged arc welding under the welding conditions shown in Table 1, combined wires of different compositions and strength levels shown in Table 2, formed grooves of cross-sectional shapes shown in FIG. 12 in base materials having the chemical compositions and tensile strengths shown in Table 3 and plate thicknesses of 20 mm and lengths of 1500 mm, and performed welding using the fluxes of No. 1 to No. 14 of the ingredients shown in Table 7.

**Table 7**

| Flux no. | CaO | MgO | Al₂O₃ | CaF₂ | SiO₂ | MnO | Others | Basicity B |
|---|---|---|---|---|---|---|---|---|
| 1 | 10.8 | 7.2 | 25.4 | 27.6 | 28.5 | 0.0 | 0.5 | 0.47 |
| 2 | 14.2 | 5.5 | 31.3 | 23.2 | 25.2 | 0.0 | 0.6 | 0.65 |
| 3 | 7.8 | 4.8 | 18.3 | 27.6 | 28.5 | 12.5 | 0.5 | 0.68 |
| 4 | 5.2 | 1.3 | 25.5 | 30.6 | 19.5 | 17.5 | 0.4 | 1.35 |
| 5 | 5.0 | 4.8 | 35.0 | 31.1 | 19.5 | 4.1 | 0.5 | 0. 93 |
| 6 | 10.2 | 3.2 | 20.1 | 38.2 | 22.5 | 5.3 | 0.5 | 1.36 |
| 7 | 8.5 | 8.5 | 25.4 | 35.5 | 21.0 | 0.0 | 0.5 | 1.31 |
| 8 | 14.7 | 3.2 | 21.5 | 43.3 | 14.8 | 2.1 | 0.4 | 2.39 |
| 9 | 10.8 | 7.2 | 20.4 | 33.5 | 27.5 | 0.0 | 0.6 | 0.81 |
| 10 | 3.9 | 4.2 | 28.5 | 49.1 | 8.5 | 5.2 | 0.6 | 2.67 |
| 11 | 11.8 | 4.0 | 22.2 | 48.4 | 12.5 | 0.6 | 0.5 | 2.59 |
| 12 | 20.5 | 2.9 | 20.4 | 39.0 | 10.2 | 6.1 | 0.9 | 3.14 |
| 13 | 13.6 | 5.5 | 32.5 | 28.6 | 19.2 | 0.0 | 0.6 | 1.32 |
| 14 | 21.5 | 1.2 | 21.2 | 42.1 | 13.7 | 0.0 | 0.3 | 2.69 |

| | | | | | | | | |
|---|---|---|---|---|---|---|---|---|
| Flux no. 1 to 14 are reference examples. | | | | | | | | |

The inventors measured the above obtained weld metals for -30°C toughness (Charpy absorption energy), tensile strength, and amount of oxygen in the same way as the above methods of evaluation and investigated the relationship between the amount of oxygen in the weld metal and the toughness in the case where the tensile strength of the weld metal is 800 MPa to 1200 MPa. The results are shown in FIG. 2.

As shown in FIG. 2, they learned that when the amount of oxygen of the weld metal is 0.018% to 0.035% in range, a good toughness of a -30°C impact absorption energy of 100J or more is obtained.

### Experiment 2

The inventors used three-electrode submerged arc welding under the welding conditions shown in Table 1, combined wires of different compositions and strength levels shown in Table 2, formed grooves of cross-sectional shapes shown in FIG. 12 in base materials having the chemical compositions and tensile strengths shown in Table 3 and plate thicknesses of 20 mm and lengths of 1500 mm, and performed welding using the fluxes of No. 15 to No. 24 of the ingredients shown in Table 8.

**Table 8**

| Flux no. | CaO | MgO | Al₂O₃ | CaF₂ | SiO₂ | Others | Basicity B |
|---|---|---|---|---|---|---|---|
| 15 | 5.5 | 1.0 | 42.0 | 31.2 | 19.8 | 0.5 | 0.47 |
| 16 | 8.0 | 1.2 | 40.3 | 31.4 | 18.5 | 0.6 | 0.81 |
| 17 | 4.8 | 4.8 | 31.8 | 38.6 | 19.5 | 0.5 | 1.07 |
| 18 | 5.5 | 4.2 | 28.5 | 42.1 | 19.4 | 0.3 | 1.26 |
| 19 | 12.9 | 3.2 | 25.3 | 38.7 | 19.5 | 0.4 | 1.58 |
| 20 | 8.2 | 3.3 | 20.3 | 49.2 | 18.5 | 0.5 | 1.81 |
| 21 | 12.6 | 4.8 | 15.5 | 49.5 | 17.0 | 0.6 | 2.32 |
| 22 | 15.1 | 3.3 | 19.5 | 48.5 | 12.7 | 0.9 | 2.75 |
| 23 | 23.2 | 4.2 | 19.8 | 41.5 | 10.7 | 0.6 | 3.16 |
| 24 | 24.9 | 4.2 | 10.0 | 49.8 | 10.3 | 0.8 | 3.62 |

| | | | | | | | |
|---|---|---|---|---|---|---|---|
| Flux no. 15 to 24 are reference examples. | | | | | | | |

The inventors measured the above obtained weld metals for tensile strength in the same way as the above-mentioned method of evaluation and investigated the relationship between the tensile strength of the weld metal, the basicity B of flux, and top slag-in. The results are shown in FIG. 3.

As shown in FIG. 3, they learned that in weld metal with a tensile strength of 800 MPa or more, if the basicity B is 1.2 or more, top slag-in does not occur.

### Experiment 3

The inventors used three-electrode submerged arc welding under the welding conditions shown in Table 1, combined wires of different compositions and strength levels shown in Table 2, formed grooves of cross-sectional shapes shown in FIG. 12 in base materials having the chemical compositions and tensile strengths shown in Table 3 and plate thicknesses of 20 mm and lengths of 1500 mm, and performed welding using the fluxes of No. 25 to No. 79 of the ingredients shown in Table 9.

**Table 9**

| Flux no. | CaO | MgO | Al₂O₃ | CaF₂ | SiO₂ | MnO | Others | Basicity B |
|---|---|---|---|---|---|---|---|---|
| 25 | 5.5 | 4.8 | 29.5 | 48.5 | 11.2 | 0.0 | 0.5 | 2.30 |
| 26 | 15.1 | 3.3 | 19.5 | 48.5 | 12.7 | 0.0 | 0.9 | 2.75 |
| 27 | 12.6 | 4.8 | 15.5 | 49.5 | 17.0 | 0.0 | 0.6 | 2.32 |
| 28 | 12..8 | 3.2 | 20.4 | 44.2 | 18.2 | 0.0 | 1.2 | 1.94 |
| 29 | 17.8 | 2.9 | 23.4 | 40.0 | 15.5 | 0.0 | 0.4 | 2.29 |
| 30 | 12.9 | 3.2 | 25.3 | 38.7 | 19.5 | 0.0 | 0.4 | 1.58 |
| 31 | 24.5 | 3.0 | 22.7 | 31.3 | 18.0 | 0.0 | 0.5 | 2.15 |
| 32 | 13.4 | 3.0 | 22.7 | 48.2 | 12.2 | 0.0 | 0.5 | 2.65 |
| 33 | 15.1 | 4.2 | 22.1 | 40.9 | 17.1 | 0.0 | 0.6 | 2.08 |
| 34 | 5.5 | 4.2 | 28.5 | 42.1 | 19.4 | 0.0 | 0.3 | 1.26 |
| 35 | 15.0 | 3.2 | 21.2 | 44.2 | 15.9 | 0.0 | 0.5 | 2.27 |
| 36 | 23.2 | 4.2 | 19.8 | 41.5 | 10.7 | 0.0 | 0.6 | 3.16 |
| 37 | 21.5 | 1.2 | 21.2 | 42.1 | 13.7 | 0.0 | 0.3 | 2.69 |
| 38 | 8.2 | 3.3 | 20.3 | 49.2 | 18.5 | 0.0 | 0.5 | 1.81 |
| 39 | 4.5 | 4.8 | 23.5 | 44.2 | 22.5 | 0.0 | 0.5 | 1.07 |
| 40 | 13.6 | 5.5 | 32.5 | 28.6 | 19.2 | 0.0 | 0.6 | 1.32 |
| 41 | 26.5 | 0.8 | 14.2 | 48.3 | 9.4 | 0.0 | 0.8 | 3.62 |
| 42 | 11.8 | 3.2 | 20.4 | 52.5 | 11.4 | 0.0 | 0.7 | 2.81 |
| 43 | 25.6 | 3.0 | 11.2 | 42.2 | 17.4 | 0.0 | 0.6 | 2.72 |
| 44 | 10.8 | 7.2 | 25.4 | 27.6 | 28.5 | 0.0 | 0.5 | 0.47 |
| 45 | 14.2 | 5.5 | 31.3 | 23.2 | 25.2 | 0.0 | 0.6 | 0.65 |
| 46 | 11.1 | 6.3 | 24.1 | 25.5 | 32.5 | 0.0 | 0.5 | 0.05 |
| 47 | 10.8 | 7.2 | 20.4 | 33.5 | 27.5 | 0.0 | 0.6 | 0.81 |
| 48 | 5.5 | 4.2 | 29.5 | 48.5 | 11.2 | 0.6 | 0.5 | 2.30 |
| 49 | 12.5 | 4.5 | 18.0 | 41.4 | 18.0 | 5.0 | 0.6 | 2.09 |
| 50 | 15.1 | 2.6 | 19.5 | 46.9 | 12.7 | 2.5 | 0.7 | 2.75 |
| 51 | 5.2 | 3.7 | 27.9 | 42.1 | 19.6 | 0.6 | 0.9 | 1.23 |
| 52 | 5.3 | 2.1 | 28.3 | 35.2 | 19.5 | 9.2 | 0.4 | 1.22 |
| 53 | 5.5 | 3.8 | 28.5 | 40.5 | 19.1 | 2.2 | 0.4 | 1.29 |
| 54 | 11.8 | 3.2 | 20.4 | 43.8 | 18.2 | 2.1 | 0.5 | 1.93 |
| 55 | 20.5 | 2.9 | 20.4 | 39.0 | 10.2 | 6.1 | 0.9 | 3.14 |
| 56 | 10.5 | 3.2 | 26.1 | 33.5 | 17.1 | 9.2 | 0.4 | 1.79 |
| 57 | 17.7 | 1.2 | 16.2 | 31.5 | 18.2 | 14.1 | 1.1 | 2.22 |
| 58 | 11.8 | 4.0 | 22.2 | 48.4 | 12.5 | 0.6 | 0.5 | 2.59 |
| 59 | 16.1 | 4.2 | 20.1 | 40.8 | 16.2 | 2.1 | 0.5 | 2.30 |
| 60 | 10.7 | 4.1 | 22.9 | 42.1 | 18.0 | 0.8 | 1.4 | 1.80 |
| 61 | 19.7 | 3.2 | 21.5 | 43.3 | 14.8 | 2.1 | 0.4 | 2.39 |
| 62 | 24.3 | 2.2 | 20.5 | 31.7 | 15.3 | 5.5 | 0.5 | 2.57 |
| 63 | 12.8 | 1.2 | 29.5 | 37.5 | 15.2 | 8.2 | 0.6 | 2.14 |
| 64 | 11.1 | 3.2 | 20.1 | 43.1 | 12.1 | 9.8 | 0.6 | 2.71 |
| 65 | 11.4 | 2.8 | 19.1 | 51.1 | 14.9 | 0.2 | 0.5 | 2.40 |
| 66 | 19.2 | 2.9 | 20.5 | 45.5 | 11.1 | 0.3 | 0.5 | 3.00 |
| 67 | 18.1 | 1.3 | 15.2 | 31.5 | 17.0 | 16.5 | 0.4 | 2.44 |
| 68 | 5.2 | 1.3 | 25.5 | 30.6 | 19.5 | 17.5 | 0.4 | 1.35 |
| 69 | 7.8 | 4.8 | 18.3 | 27.6 | 28.5 | 12.5 | 0.5 | 0. 68 |
| 70 | 14.2 | 2.6 | 15.5 | 48.5 | 9.2 | 9.5 | 0.5 | 3.35 |
| 71 | 3.9 | 4.2 | 28.5 | 49.1 | 8.5 | 5.2 | 0.6 | 2.67 |
| 72 | 8.4 | 3.0 | 18.3 | 52.5 | 12.1 | 5.2 | 0.5 | 2.74 |
| 73 | 13.7 | 4.1 | 15.3 | 52.5 | 8.5 | 5.3 | 0.6 | 3.44 |
| 74 | 27.5 | 3.2 | 17.2 | 35.0 | 11.2 | 5.5 | 0.4 | 3.28 |
| 75 | 5.0 | 4.8 | 35.0 | 31.1 | 19.5 | 4.1 | 0.5 | 0. 93 |
| 76 | 10.2 | 3.2 | 20.1 | 38.2 | 22.5 | 5.3 | 0.5 | 1.36 |
| 77 | 20.3 | 3.6 | 23.2 | 28.5 | 18.5 | 5.3 | 0.6 | 1. 97 |
| 78 | 17.2 | 6.4 | 14.2 | 40.2 | 16.2 | 5.3 | 0.5 | 2.58 |
| 79 | 11.0 | 0.5 | 23.2 | 49.5 | 11.0 | 5.3 | 0.5 | 2.75 |

| | | | | | | | | |
|---|---|---|---|---|---|---|---|---|
| Flux no. 25 to 79 are reference examples. | | | | | | | | |

The inventors measured the thus obtained weld metal for the amount of oxygen in the same way as the above method of evaluation and investigated the relationship between the amount of oxygen of the weld metal and the basicity B of flux. The results are shown in FIG. 4.

As shown in FIG. 4, they learned that there is a correlation between the amount of oxygen of the weld metal and the basicity B of flux.

### Experiment 4

The inventors used three-electrode submerged arc welding under the welding conditions shown in Table 1, combined wires of different compositions and strength levels shown in Table 2, formed grooves of cross-sectional shapes shown in FIG. 12 in base materials having the chemical compositions and tensile strengths shown in Table 3 and plate thicknesses of 20 mm and lengths of 1500 mm, and performed welding using the fluxes of No. 80 to No. 89 of the ingredients shown in Table 10.

**Table 10**

| Flux no. | CaO | MgO | Al₂O₃ | CaF₂ | SiO₂ | Others | Basicity B |
|---|---|---|---|---|---|---|---|
| 80 | 24.8 | 1.2 | 14.9 | 30.1 | 28.5 | 0.5 | 1.21 |
| 81 | 19.4 | 6.8 | 15.5 | 30.2 | 27.5 | 0.6 | 1.23 |
| 82 | 20.1 | 4.4 | 20.4 | 32.1 | 22.5 | 0.5 | 1.61 |
| 83 | 8.5 | 8.5 | 25.4 | 35.5 | 21.0 | 0.5 | 1.31 |
| 84 | 5.5 | 4.2 | 28.5 | 42.1 | 19.4 | 0.3 | 1.26 |
| 85 | 8.2 | 3.3 | 20.3 | 49.2 | 18.5 | 0.5 | 1.81 |
| 86 | 12.6 | 4.8 | 15.5 | 49.5 | 17.0 | 0.6 | 2.32 |
| 87 | 15.1 | 3.3 | 19.5 | 48.5 | 12.7 | 0.9 | 2.75 |
| 88 | 17.8 | 2.9 | 23.4 | 40.0 | 15.5 | 0.4 | 2.29 |
| 89 | 23.2 | 4.2 | 19.8 | 41.5 | 10.7 | 0.6 | 3.16 |

| | | | | | | | |
|---|---|---|---|---|---|---|---|
| Flux no. 80 to 89 are reference examples. | | | | | | | |

The inventors measured the above obtained weld metal for tensile strength in the same way as the above-mentioned method of evaluation and investigated the relationship between the composition of the flux, the tensile strength of the weld metal, and top slag-in. The results are shown in FIG. 5.

FIG. 5 is a graph showing the relationship between the amount of SiO₂ in the flux, the tensile strength of the weld metal, and the trend in occurrence of top slag-in.

As shown in FIG. 5, when the tensile strength of the weld metal is 800 MPa or more, if the amount of SiO₂ in the flux is over 20%, top slag-in occurs.

### Experiment 5

The inventors used three-electrode submerged arc welding under the welding conditions shown in Table 1, combined wires of different compositions and strength levels shown in Table 2, formed grooves of cross-sectional shapes shown in FIG. 12 in base materials having the chemical compositions and tensile strengths shown in Table 3 and plate thicknesses of 20 mm and lengths of 1500 mm, and performed welding using the fluxes of No. 90 to No. 97 of the ingredients shown in Table 11.

**Table 11**

| Flux no. | CaO | MgO | Al₂O₃ | CaF₂ | SiO₂ | Others | Basicity B |
|---|---|---|---|---|---|---|---|
| 90 | 22.8 | 4.2 | 28.5 | 25.5 | 18.5 | 0.5 | 1.81 |
| 91 | 13.6 | 5.5 | 32.5 | 28.6 | 19.2 | 0.6 | 1.32 |
| 92 | 5.5 | 4.2 | 28.5 | 42.1 | 19.4 | 0.3 | 1.26 |
| 93 | 12.9 | 3.2 | 25.3 | 38.7 | 19.5 | 0.4 | 1.58 |
| 94 | 12.6 | 4.8 | 15.5 | 49.5 | 17.0 | 0.6 | 2.32 |
| 95 | 15.1 | 3.3 | 19.5 | 48.5 | 12.7 | 0.9 | 2.75 |
| 96 | 22.8 | 4.6 | 31.3 | 23.2 | 17.5 | 0.6 | 1.81 |
| 97 | 24.5 | 3.0 | 22.7 | 31.3 | 18.0 | 0.5 | 2.15 |

| | | | | | | | |
|---|---|---|---|---|---|---|---|
| Flux no. 90 to 97 are reference examples. | | | | | | | |

The inventors measured the above obtained weld metal for tensile strength in the same way as the above-mentioned method of evaluation and investigated the relationship between the composition of the flux, the tensile strength of the weld metal, and the top slag-in. The results are shown in FIG. 6.

FIG. 6 is a graph showing the relationship between the amount of CaF₂ in the flux, the tensile strength of the weld metal, and the trend in occurrence of top slag-in.

As shown in FIG. 6, when the amount of CaF₂ in the flux is less than 30%, top slag-in occurs.

### Experiment 6

The inventors investigated the moisture adsorption in the fluxes of No. 98 to No. 105 of the ingredients shown in Table 12 by the above method. The results are shown in FIG. 7.

**Table 12**

| Flux no. | CaO | MgO | Al₂O₃ | CaF₂ | SiO₂ | Others | Basicity B |
|---|---|---|---|---|---|---|---|
| 98 | 20.5 | 4.8 | 5.5 | 49.2 | 19.5 | 0.5 | 2.60 |
| 99 | 20.2 | 4.8 | 10.1 | 45.9 | 18.5 | 0.5 | 2.53 |
| 100 | 20.2 | 4.9 | 12.4 | 43.5 | 18.5 | 0.5 | 2.43 |
| 101 | 20.1 | 4.8 | 15.0 | 42.4 | 17.2 | 0.5 | 2.48 |
| 102 | 20.2 | 4.6 | 15.8 | 42.7 | 16.2 | 0.5 | 2.57 |
| 103 | 13.6 | 4.7 | 17.2 | 47.9 | 16.1 | 0.5 | 2.39 |
| 104 | 13.2 | 4.8 | 20.1 | 45.2 | 16.2 | 0.5 | 2.24 |
| 105 | 13.3 | 4.2 | 25.5 | 40.2 | 16.3 | 0.5 | 1.99 |

Flux no. 98 to 105 are reference examples.

FIG. 7 is a graph showing the relationship between the Al₂O₃ in the flux and the amount of moisture adsorption, while FIG. 8 is a graph showing the relationship between the amount of SiO₂ in the flux and the amount of moisture adsorption.

As shown in FIG. 7, with an Al₂O₃ in the flux of 15% or less, the amount of adsorbed moisture rapidly increases.

### Experiment 7

The inventors investigated the moisture adsorption in the fluxes of No. 106 to No. 112 of the ingredients shown in Table 13 by the above method. The results are shown in FIG. 8.

**Table 13**

| Flux no. | CaO | MgO | Al₂O₃ | CaF₂ | SiO₂ | Others | Basicity B |
|---|---|---|---|---|---|---|---|
| 106 | 23.5 | 4.8 | 32.5 | 31.2 | 7.5 | 0.5 | 3.05 |
| 107 | 20.8 | 3.3 | 29.5 | 36.7 | 9.2 | 0.5 | 2.90 |
| 108 | 20.2 | 3.5 | 25.5 | 40.3 | 10.0 | 0.5 | 2.96 |
| 109 | 18.5 | 3.6 | 25.3 | 39.7 | 12.4 | 0.5 | 2.62 |
| 110 | 18.4 | 3.3 | 23.2 | 39.5 | 15.1 | 0.5 | 2.36 |
| 111 | 18.3 | 3.2 | 17.2 | 40.6 | 20.2 | 0.5 | 1.97 |
| 112 | 14.9 | 3.1 | 16.5 | 40.5 | 24.5 | 0.5 | 1.39 |

| | | | | | | | |
|---|---|---|---|---|---|---|---|
| Flux no. 106 to 112 are reference examples. | | | | | | | |

FIG. 8 is a graph showing the relationship between the amount of SiO₂ in the flux and the amount of moisture adsorption. As shown in FIG. 8, when the amount of SiO₂ in the flux is less than 10%, the amount of adsorbed moisture rapidly increases.

### Experiment 8

The inventors investigated the moisture adsorption in the fluxes of No. 113 to No. 120 of the ingredients shown in Table 14 by the above method. The results are shown in FIG. 9.

**Table 14**

| Flux no. | CaO | MgO | Al₂O₃ | CaF₂ | SiO₂ | Others | Basicity B |
|---|---|---|---|---|---|---|---|
| 113 | 23.9 | 0.2 | 15.2 | 50.0 | 10.2 | 0.5 | 3.44 |
| 114 | 22.3 | 0.6 | 15.5 | 49.8 | 11.3 | 0.5 | 3.25 |
| 115 | 22.5 | 0.6 | 15.9 | 48.2 | 12.3 | 0.5 | 3.11 |
| 116 | 22.3 | 0.8 | 15.9 | 46.2 | 14.3 | 0.5 | 2.85 |
| 117 | 20.2 | 1.0 | 18.6 | 44.0 | 15.7 | 0.5 | 2.51 |
| 118 | 17.8 | 1.0 | 21.5 | 41.0 | 18.2 | 0.5 | 2.01 |
| 119 | 17.2 | 1.2 | 28.1 | 34.8 | 18.2 | 0.5 | 1.70 |
| 120 | 14.7 | 4.8 | 29.5 | 30.7 | 19.8 | 0.5 | 1.41 |

| | | | | | | | |
|---|---|---|---|---|---|---|---|
| Flux no. 113 to 120 are reference examples. | | | | | | | |

FIG. 9 is a graph showing the relationship between the basicity B of flux and the amount of moisture adsorption. As shown in FIG. 9, even when the basicity B is over 3.2, the amount of adsorbed moisture rapidly increases.

### Experiment 9

The inventors used three-electrode submerged arc welding under the welding conditions shown in Table 1, combined wires of different compositions and strength levels shown in Table 2, formed grooves of cross-sectional shapes shown in FIG. 12 in base materials having the chemical compositions and tensile strengths shown in Table 3 and plate thicknesses of 20 mm and lengths of 1500 mm, and performed welding using the fluxes of No. 121 to No. 139 of the ingredients shown in Table 15.

**Table 15**

| Flux no. | CaO | MgO | Al₂O₃ | CaF₂ | SiO₂ | MnO | Others | Basicity B |
|---|---|---|---|---|---|---|---|---|
| 121 | 5.5 | 4.2 | 29.5 | 48.5 | 11.2 | 0.6 | 0.5 | 2.30 |
| 122 | 12.5 | 4.5 | 18.0 | 41.4 | 18.0 | 5.0 | 0.6 | 2.09 |
| 123 | 15.1 | 2.6 | 19.5 | 46.9 | 12.7 | 2.5 | 0.7 | 2.75 |
| 124 | 5.2 | 3.7 | 27.9 | 42.1 | 19.6 | 0.6 | 0.9 | 1.23 |
| 125 | 5.3 | 2.1 | 28.3 | 35.2 | 19.5 | 9.2 | 0.4 | 1.22 |
| 126 | 5.5 | 3.8 | 28.5 | 40.5 | 19.1 | 2.2 | 0.4 | 1.29 |
| 127 | 11.8 | 3.2 | 20.4 | 43.8 | 18.2 | 2.1 | 0.5 | 1.93 |
| 128 | 20.5 | 2.9 | 20.4 | 39.0 | 10.2 | 6.1 | 0.9 | 3.14 |
| 129 | 10.5 | 3.2 | 26.1 | 33.5 | 17.1 | 9.2 | 0.4 | 1.79 |
| 130 | 17.7 | 1.2 | 16.2 | 31.5 | 18.2 | 14.1 | 1.1 | 2.22 |
| 131 | 11.8 | 4.0 | 22.2 | 48.4 | 12.5 | 0.6 | 0.5 | 2.59 |
| 132 | 16.1 | 4.2 | 20.1 | 40.8 | 16.2 | 2.1 | 0.5 | 2.30 |
| 133 | 10.7 | 4.1 | 22.9 | 42.1 | 18.0 | 0.8 | 1.4 | 1.80 |
| 134 | 14.7 | 3.2 | 21.5 | 43.3 | 14.8 | 2.1 | 0.4 | 2.39 |
| 135 | 24.3 | 2.2 | 20.5 | 31.7 | 15.3 | 5.5 | 0.5 | 2.57 |
| 136 | 12.8 | 1.2 | 29.5 | 37.5 | 15.2 | 8.2 | 0.6 | 2.14 |
| 137 | 11.1 | 3.2 | 20.1 | 43.1 | 12.1 | 9.8 | 0.6 | 2.71 |
| 138 | 11.4 | 2.8 | 19.1 | 51.1 | 14.9 | 0.2 | 0.5 | 2.40 |
| 139 | 19.2 | 2.9 | 20.5 | 45.5 | 11.1 | 0.3 | 0.5 | 3.00 |

| | | | | | | | | |
|---|---|---|---|---|---|---|---|---|
| Flux no. 121 to 139 are reference examples. | | | | | | | | |

The inventors measured the thus obtained weld metal for the amount of oxygen in the same way as the method of evaluation explained above and investigated the relationship of the amount of oxygen of the weld metal and the basicity B of flux. The results are shown in FIG. 11.

As shown in FIG. 11, by adding MnO in an amount of 0.5% or more, with a basicity B of 1.2 or more, it is possible to stably obtain weld metal with an amount of oxygen of 0.018% or more.

### Industrial Applicability

In the above way, when using the submerged arc welding method to prepare high strength weld metal, by using the melt flux for submerged arc welding use of the present invention, it is possible to obtain a weld bead which is excellent in bead shape and also is free of the defect of the inside of the weld bead called "top slag-in". Furthermore, due to the system of ingredients of the present invention, even with a composition of flux where top slag-in does not occur, the amount of oxygen of the weld metal can be optimized and weld metal having excellent low temperature toughness can be easily obtained. The contribution to industry is extremely great.

### Reference Signs List

- ST:: Top slag-in
- SL:: Bottom slag-in

## Claims

1. Melt type high basicity flux for submerged arc welding use which is used when welding the seams of UO pipe for pipeline use having a tensile strength of a base material of 800 MPa to 1200 MPa, said melt type high basicity flux for submerged arc welding use **characterized by** consisting of, by mass%,
CaO: 5.0% to 25.0%,
MgO: 1.0% to 5.0%,
Al₂O₃: over 15.0% to 30.0%,
CaF2: 30.0% to 50.0%,
SiO₂: 10.0% to 20.0%,
MnO: 0.5% to 15.0%, and
one or both of Li₂O and K₂O in a total of 0.2% to 5.0%, and
optionally one or both of CaCO₃ in an amount of 0.05% to 2.0% and B₂O₃ in an amount of 0.05% to 2.0%,
having a balance of unavoidable impurities, and having a basicity B obtained by formula (1) of 1.2 to 3.2:
B=6.05N[CaO]+4.0N[MgO]+5.1N[CaF₂]+4.8N[MnO]-0.2N[Al₂O₃]-6.31N[SiO₂] (1),
wherein N[k] indicates the molar percentage of the ingredient "k".

2. Use of the melt type high basicity flux as set forth in claim 1 for submerged arc welding of the seams of UO pipe for pipeline use having a tensile strength of a base material of 800 MPa to 1200 MPa.

## Patentansprüche

1. Hochbasisches Flussmittel vom Schmelz-Typ für Unterpulver-Lichtbogenschweißung, welches beim Schweißen der Nähte von UO-Rohren für Rohrleitungen mit einer Zugfestigkeit eines Grundmaterials von 800 MPa bis 1200 MPa verwendet wird, wobei das hochbasische Flussmittel vom Schmelz-Typ für Unterpulver-Lichtbogenschweißung **dadurch gekennzeichnet ist, dass** es, in Massen-%, besteht aus:
CaO: 5,0% bis 25,0%,
MgO: 1,0% bis 5,0%,
Al₂O₃: mehr als 15,0% bis 30,0%,
CaF₂: 30,0% bis 50,0%,
SiO₂: 10,0% bis 20,0%,
MnO: 0,5% bis 15,0%, und
einem oder beiden von Li₂O und K₂O in einer Gesamtmenge von 0,2% bis 5,0%, und gegebenenfalls einem oder beiden von CaCO₃ in einer Menge von 0,05% bis 2,0% und B₂O₃ in einer Menge von 0,05% bis 2,0%,
mit einem Rest an unvermeidbaren Verunreinigungen und mit einer Basizität B, erhätlich durch Formel (1), von 1,2 bis 3,2:
B=6,05N[CaO]+4,0N[MgO]+5,1N[CaF₂]+4,8N[MnO]-0,2N[Al₂O₃]-6,31N[SiO₂] (1),
wobei N[k] den molaren Prozentsatz des Bestandteils "k" angibt.

2. Verwendung des hochbasischen Flussmittels vom Schmelz-Typ gemäß Anspruch 1 für Unterpulver-Lichtbogenschweißung der Nähte von UO-Rohren für Rohrleitungen mit einer Zugfestigkeit eines Grundmaterials von 800 MPa bis 1200 MPa.

## Revendications

1. Flux à forte basicité de type fondu pour soudage à l'arc submergé qui est utilisé lors du soudage des joints de tuyau UO pour oléoducs dont le matériau de base a une résistance à la traction de 800 à 1 200 MPa, ledit flux à forte basicité de type fondu pour soudage à l'arc submergé étant **caractérisé en ce qu'**il comprend, en % en poids,
CaO : 5,0 % à 25,0 %,
MgO : 1,0 % à 5,0 %,
Al₂O₃ : plus de 15,0 % à 30,0 %,
CaF₂ : 30,0 % à 50,0 %,
SiO₂ : 10,0 % à 20,0 %,
MnO : 0,5 % à 15,0 %, et
Li₂O et/ou K₂O en un total de 0,2 % à 5,0 %, et
éventuellement CaCO₃ en une quantité de 0,05 % à 2,0 % et/ou B₂O₃ en une quantité de 0,05 % à 2,0 %,
le reste étant des impuretés inévitables, et ayant une basicité B obtenue par la formule (1) de 1,2 à 3,2 :
B=6,05N[CaO]+4,0N[MgO]+5,1N[CaF₂]+4,8N[MnO]-0,2N[Al₂O₃]-6,31N[SiO₂] (1),
où N[k] indique le pourcentage molaire de l'ingrédient "k".

2. Utilisation du flux à forte basicité de type fondu selon la revendication 1 pour le soudage à l'arc submergé des joints de tuyau UO pour oléoducs dont le matériau de base a une résistance à la traction de 800 à 1 200 MPa.
